# EUROPEAN PATENT SPECIFICATION

(11) **EP 1 021 996 B1**
(45) Date of publication and mention of the grant of the patent: **23.04.2003**
(21) Application number: 00200096.6
(22) Date of filing: 12.01.2000
(51) Int. Cl.: A61C 8/00

(54) **Device for an endosteal dental implant**
Vorrichtung für ein enossales Zahnimplantat
Dispositif pour un implant dentaire intra-osseux

(30) Priority: 25.01.1999 IT MI990128
(43) Date of publication of application: 26.07.2000
(73) Proprietor: Hofmann s.r.l., 20052 Monza (MI) (IT)
(72) Inventor: Hofmann, Roberto Maria, 20046 Biassono (Milan) (IT); Pizzamiglio, Alberto, 20060 Colturano (Milan) (IT)
(74) Representative: Appoloni, Romano

(56) References cited:
- DE-A- 19 646 307
- DE-C- 19 633 570
- US-A- 4 772 204
- US-A- 5 195 892
- US-A- 5 823 776

## Description

Endosteal dental implants have been used for over thirty years in the rehabilitation of patients who are partially or totally toothless, and the art of implantation must now be considered as an integral and important part of dentistry.

The implant system is based on the principle of integration into the bone, which permits direct anchorage of an implant by means of formation of osseous tissue, without interposition of fibrous tissue at the bone/implant interface. This system guarantees good probability of success even in the long term.

In the construction of prostheses on endosteal implants, it is of fundamental importance that the manufactured articles can adapt perfectly to the masticatory anatomy and physiology of the individual patient.

An endosteal dental implant of the type to which the present invention relates is substantially of the two-stage type, as disclosed in US 5 195 892, i.e. it comprises the actual implant, which consists of a component which is threaded on the exterior, for securing to the maxillary or mandibular bone, thus constituting the endosteal part, and a post, which is also known as a stump, which from an operative point of view projects into the oral cavity, and is received and secured inside the endosteal implant.

The prosthetic restoration device is thus incorporated on the post or connected to the latter. Since no possibility of rotation may be created between the endosteal implant and the prosthesis, it is necessary to provide the head of the implant with anti-rotational protection device. For this purpose, the upper end part of the endosteal implant is generally in the shape of a multi-angled component, mostly a hexagon, which can project externally from the neck of the implant, or can be recessed inside the neck itself, thus ensuring that the post, and together with the latter the prosthetic restoration device, can be mounted in a fixed, secure and repeatable position. In this type of two-stage endosteal implant with an anti-rotational protection device, since it is not possible to secure the base of the post to the endosteal implant by screwing, a post screw is generally used, i.e. the post and the implant are connected by means of a separate screw.

Substantially, an endosteal dental implant requires both optimum stability of the connection between the stump and the implant, and the possibility of obtaining repeatability of positioning of the stump in the impression transfer operation.

In this respect, an appropriate impression technique is in particular that of re-positioning, in which impression caps are applied or screwed onto the implant before the impression is taken. After the impression-holder is removed from the oral cavity, there is also removal of the impression caps which have remained inside the oral cavity. Subsequently, these caps are assembled together with the respective similar laboratory caps, and re-positioned in the impression. It is thus of fundamental importance to be able to ensure correct positioning of the transfer cap, complete with the similar laboratory cap.

It will thus be appreciated that it is important to have absolute repeatability of positioning of the stump during this impression step.

It should be noted that in endosteal dental implants of a known type, in general, one or the other of these two fundamental characteristics is satisfactorily obtained, since in general the possibility of obtaining repeatability of positioning of the stumps in the impression transfer is obtained to the detriment of the stability of the implant-stump connection.

For example, in two-stage implants in which the implant and the post are connected by means of regular polygonal shapes, for example a hexagon, provided on the neck of the implant, when mastication takes place, at the angles of the polygonal shapes there is creation of points of incision and intensification of the forces, which are undoubtedly to the detriment to the stability of the implant-post connection, particularly over a period of time.

The fundamental object of the present invention is thus to be able to guarantee in a single endosteal dental implant both the fundamental characteristics, of stability of the stump/implant connection and repeatability of positioning of the stump in the impression transfer operation, without enhancement of one of the two characteristics being able to be to the detriment of the other. In particular, it is required to solve this problem in a single implant.

This object, together with other advantages which are illustrated hereinafter in the present description, are achieved by the present invention according to claim 1.

In order better to describe the characteristics and advantages of the invention, a practical embodiment is described with reference to the figures of the attached drawings. This example should not be considered limiting in relation to the invention itself.

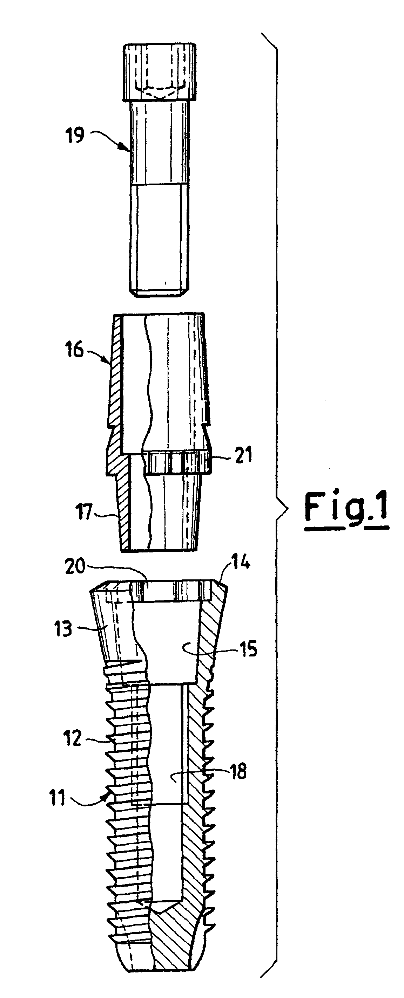

With reference to these drawings, figure 1 is an exploded view, partially in cross-section, of the parts which constitute the said device;

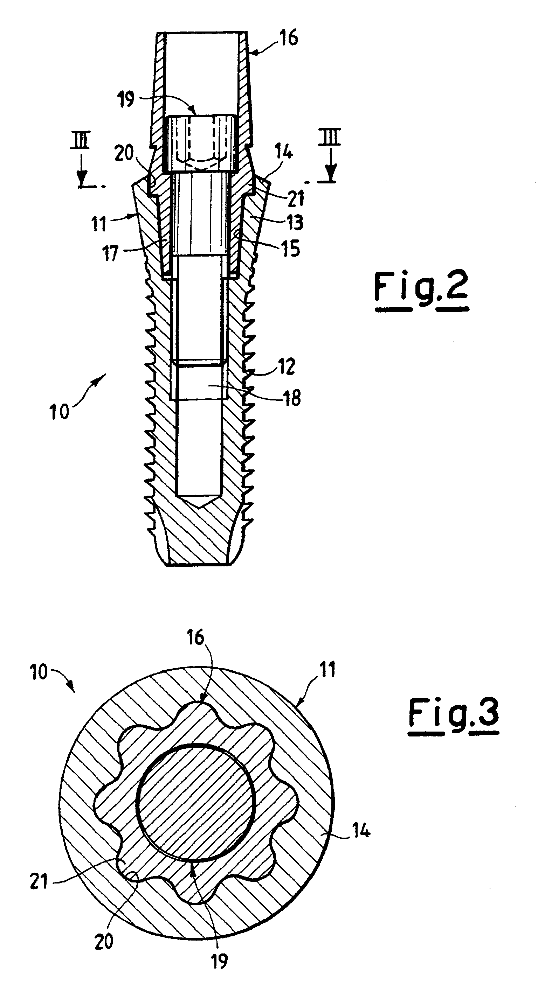

Figure 2 is a longitudinal view in cross-section of the same parts, connected to one another in operation; and Finally, figure 3 shows a transverse cross-section along the line III-III in figure 2.

In relation to these figures, the reference 10 indicates as a whole a device for a two-stage endosteal dental implant according to the invention.

This substantially comprises a screw implant 11 with an outer thread 12, which is designed for securing in the maxillary or mandibular bone.

The said implant 11 is provided with a head 13 with a frusto-conical shape, which ends at the top in a neck 14. The head 13 is hollow in order to form a seat 15, which is also frusto-conical, and is designed to receive a corresponding male component 17 of a post 16.

Internally, the body of the implant 11 is also hollow in an axial direction for most of its length. This cavity is indicated in figure 1 as 18, and is used substantially to accommodate a screw 19 for securing the post to the implant.

The material from which the entire device is made is any suitable alloplastic material, preferably titanium or its alloys, or ceramic, or any suitable composite material which is commonly used in implants.

Rotation of the post 16 inside the implant 11, once the latter are connected, is prevented by an anti-rotational protection device with which the head 13 of the implant is provided. This anti-rotational protection device is substantially provided by the inner shape of the neck 14 of the head 13, consisting of a plurality of rounded lobes 20. In the example shown in the drawings, there are exactly eight of these lobes.

During the step of securing to the post 16, this inner multi-lobed shape of the neck 14 of the implant 11 constitutes the female component, with which there is connected a corresponding male component with a complementary shape, indicated as 21 in figure 1, which thus also contains eight lobes.

When the implant 11 and the post 16 are connected by means of the conical connection 15-17 and the multi-lobed connection, 20-21, securing between these components takes place by means of insertion of the screw 19, which in the example shown in the drawings is advantageously a hexagonal hollow-headed screw.

In general, the implant according to the invention as previously described can guarantee optimum stability of the connection between the stump (or post) and the implant, together with a property of repeatability of positioning of the stump itself for impression transfer in a two-stage system, which also guarantees an anti-rotational connection which is essential in cases of a single implant.

As far as the stability of the connection is concerned, the two-stage implant according to the invention has a conical connection to the stump, which, owing to the possibility of using a securing screw with a larger diameter (2 mm) permits a better hold than hexagonal or octagonal anchorages which are secured by means of screws with a reduced diameter (1.5-1.6 mm, owing to the lack of space), such as those proposed by many known implants.

As far as the repeatability of the positioning is concerned, according to the invention there is inserted an anti-rotational system consisting of a series of lobes inside the neck, which permits the impression transfer of the stumps, and repositioning of the latter on the casts and on the patient.

The particular shape of the rounded lobes prevents points of incision and intensification of the forces, unlike the situation of regular polygonal shapes (hexagons, octagons, etc.) of a known type.

According to the present invention, in this anti-rotational system, the lobes are not involved in the mechanical hold after the implanting step, which is provided solely by the conical connection. This substantially provides improved stability of the stump/implant connection.

The shape of the neck of the implant in the device according to the present invention permits both the technique of excavated dental implants (prior preparation of the osseous reception site, by means of corresponding drilling), and the trans-mucous technique (with obvious advantages derived from the non-re-opening of the tissues).

The implant according to the invention has a thread with a standardised, self-threading profile. According to the present invention, use can also be made of pre-angled stumps and a universal stump, thus providing a complete range of prosthetic solutions.

To summarise, in addition to the characteristics previously described, the salient characteristics of the implant according to the invention are: substantial ease of implantation; strength of the materials used (pure titanium of grade 4 and titanium alloy of grade 5); rough surface sanded with corundum (aluminium dioxide); conical implant/stump connection, with locking by means of a separate screw; repeatability of the position with a plurality of positionings (eight in the example), which is possible by means of the newly-designed multi-lobed shape; possibility of open trans-mucous healing without second re-opening of the tissues for exposure of the implant; implant with a self-threading screw, with standardised preparation of the implant bed, to the benefit of the primary stability; possibility of use of straight, angled and universal stumps; and a mounting device and closing screw provided in the sterile pack together with the implant.

## Claims

1. An endosteal dental implant of the two-stage type, comprising a screw implant (11) with an outer thread (12), and which is hollow on the interior in order to accommodate a post (16), rotation of said post inside said implant being prevented by an anti-rotational protection device with which the head (13) of the said implant (11) is provided said head ending at the top in a neck (14) which acts as said anti-rotational protection device, and is internally shaped according to a plurality of rounded lobes (20), said head (13) and said multi-lobed neck (14) of the implant being able to be connected to corresponding male components (21) with a complementary shape provided on said post, securing between the implant and post being provided by a separate post screw (19), **characterized in that** said head (13) of the implant is substantially conical, said neck being hollow in order to form a seat (15) which is also conical and can accommodate a corresponding conical male part (17) of said post.

2. Device according to claim 1, **characterized in that** the said plurality of rounded lobes (20) are eight in number.

## Patentansprüche

1. Endossales Zahnimplantat zweistufiger Art, aufweisend ein Schraubimplantat (11) mit einem Außengewinde (12), welches zudem zur Aufnahme eines Stiftes (16) im Innern hohl ist, wobei eine Rotation des Stiftes innerhalb des Implantats durch eine Verdreh-Sicherungseinrichtung verhindert wird, mit der der Kopf (13) des Implantats (11) versehen ist, der Kopf am oberen Ende in einem Hals (14) endet, der als die Verdreh-Sicherungseinrichtung wirkt und intern entsprechend einer Mehrzahl abgerundeter Erhöhungen (20) geformt ist, der Kopf (13) und der mehrfach erhöhte Hals (14) des Implantats mit entsprechenden vorspringenden Teilen (21) komplementärer Form, die auf dem Stift ausgebildet sind, verbindbar sind, wobei eine Sicherung zwischen dem Implantat und dem Stift durch eine separate Stiftschraube (19) vorgesehen ist, **dadurch gekennzeichnet, daß** der Kopf (13) des Implantats im wesentlichen konisch ist, der Hals hohl ist zur Ausbildung eines Sitzes (15), welcher ebenfalls konisch ist und ein entsprechendes konisches Steckteil (17) des Stiftes aufnehmen kann.

2. Vorrichtung nach Anspruch 1, **dadurch gekennzeichnet, daß** die Mehrzahl abgerundeter Erhöhungen (20) zahlenmäßig acht beträgt.

## Revendications

1. Implant dentaire endo-osseux de type deux niveaux, comprenant un implant à vis (11) filetée (12), et creux à l'intérieur afin de contenir un pivot (16), la rotation dudit pivot à l'intérieur dudit implant étant empêchée par un dispositif de protection contre les rotations dont est équipée la tête (13) dudit implant (11), ladite tête ayant à son extrémité un col (14) servant de dispositif de protection contre les rotations et formé à l'intérieur selon une pluralité de bossages arrondis (20), ladite tête (13) et ledit col multi-bossages (14) de l'implant devant pouvoir être adaptés sur les composants mâles correspondants (21), avec une pièce complémentaire adaptée sur ledit pivot, une vis de pivot distincte (19) assurant la liaison entre l'implant et le pivot, **caractérisé en ce que** ladite tête (13) de l'implant est essentiellement conique, ledit col étant creux afin de former un siège (15) également conique et pouvant accueillir une pièce mâle conique correspondante (17) dudit pivot.

2. Dispositif selon la revendication 1, **caractérisé en ce que** ladite pluralité de bossages arrondis (20) est au nombre de huit.
